# EUROPÄISCHE PATENTSCHRIFT

(11) **EP 3 064 277 B1**
(45) Veröffentlichungstag und Bekanntmachung des Hinweises auf die Patenterteilung: **18.12.2019**
(21) Anmeldenummer: 16154628.8
(22) Anmeldetag: 08.02.2016
(51) Int. Cl.: B03C 11/00, C10G 33/02, F02M 37/22

(54) **KRAFTSTOFFFILTEREINRICHTUNG**
FUEL FILTER DEVICE
DISPOSITIF DE FILTRE A CARBURANT

(30) Priorität: 02.03.2015 DE 102015203687
(43) Veröffentlichungstag der Anmeldung: 07.09.2016
(73) Patentinhaber: Mahle International GmbH, 70376 Stuttgart (DE)
(72) Erfinder: KOPPI, Peter, 9412 Sankt Margarethen (AT); KRAUT, Maria, A-9143 St. Michael (AT)
(74) Vertreter: BRP Renaud & Partner mbB Rechtsanwälte Patentanwälte Steuerberater

(56) Entgegenhaltungen:
- WO-A1-2014/119978
- WO-A2-2013/164002
- DE-A1-102011 120 653
- DE-A1-102012 024 349
- GB-A- 494 153
- GB-A- 1 046 317
- US-A- 4 372 847
- US-A- 4 661 227
- US-A- 5 244 550
- US-A- 5 575 896
- US-A- 5 643 469
- US-A1- 2011 031 124
- US-A1- 2014 008 286
- US-A1- 2014 339 089

## Beschreibung

Die vorliegende Erfindung betrifft eine Kraftstofffiltereinrichtung gemäß dem Oberbegriff des Anspruchs 1.

In modernen Kraftstoffversorgungssystemen werden in den zugehörigen Kraftstofffiltereinrichtungen üblicherweise Wasserabscheider eingesetzt, um einen im Kraftstoff enthaltenen Wasseranteil soweit wie möglich abzusenken. Wird das im Kraftstoff enthaltene Wasser nicht separiert und abgeschieden, so kann es in den nachfolgenden Aggregaten zu unerwünschter Korrosion, Abrasion, Werkstoffversprödung sowie zu Kavitation führen. Ebenso führt ein erhöhter Wasseranteil im Kraftstoffversorgungssystem zu einer Wachstumsförderung von Mikroorganismen, welche eine Verschleimung der Kraftstofffiltereinrichtung bewirken sowie eine erhöhte Korrosion am Filtergehäuse hervorrufen kann. Als Wasserabscheider werden dabei üblicherweise sogenannte Koaleszer eingesetzt, die kleinste Wasseranteile zu größeren Wassertröpfchen koaleszieren und diese aufgrund der Schwerkraft aus der Kraftstoff-Wasser-Emulsion abscheiden. Sofern für die Wasserabscheidung notwendig, kann zudem ein sogenannter Endabscheider bestehend aus einem hydrohoben Gewebe die in der Kraftstoff-Wasser-Emulsion enthaltenen Wassertropfen herausfiltern. Gesammelt wird das derart abgeschiedene Wasser dann in separaten Wassersammelräumen, aus denen es periodisch oder spätestens beim Auswechseln eines Filterelements abgelassen wird.

Aus der DE 10 2010 062 813 A1 ist eine Filtereinrichtung für einen Verbrennungsmotor eines Kraftfahrzeuges, insbesondere ein Kraftstoff- oder Schmierstofffilter, mit einem Filtergehäuse und einem in diesem angeordneten und in Radialrichtung von einer Rohseite zu einer Reinseite durchströmten Ringfilterelement bekannt. Auf der Reinseite des Filterelementes und unterhalb desselben ist dabei ein Wasserabscheider angeordnet, der eine von radial außen nach radial innen für Kraft-/Schmierstoff durchgängige, hydrophobe und sich in Axialrichtung des Filterelementes erstreckende, ringförmige Membran aufweist. Hierbei handelt es sich um einen klassischen Koaleszer, der den Wasserabscheidegrad verbessern soll.

Aus der US 5,643,469 A ist ein elektrischer Koaleszer mit zwei rohrförmig ausgebildeten Elektroden bekannt, die zusammen einen Ringkanal bilden und oben angeordnete tangential ausgerichtete Einströmöffnungen aufweisen, die eine schraubenförmige Strömung des Kraftstoffs im Ringkanal erzwingen.

Aus der US 2011/031124 A1, der US 4,372,847 A, der DE 10 2012 024 349 A1 und der US 2014/008286 A1 sind weitere Koaleszer bekannt.

Nachteilig bei den aus dem Stand der Technik bekannten Wasserabscheidern ist, dass diese nur eine begrenzte Lebensdauer aufweisen, die Leistungsfähigkeit gegen Ende der Lebensdauer zum Teil erheblich abnimmt und daher beispielsweise periodisch ausgetauscht werden sollten.

Die vorliegende Erfindung beschäftigt sich mit dem Problem, für eine Kraftstofffiltereinrichtung eine verbesserte Ausführungsform anzugeben, die insbesondere gleichbleibend gute Abscheidewerte erzielt und ein Austauschen des Wasserabscheiders nicht mehr erfordert.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Kraftstofffiltereinrichtung für eine Brennkraftmaschine einen als elektrischen Koaleszer ausgebildeten Wasserabscheider zum Abscheiden einer polaren Phase, insbesondere zum Abscheiden von Wasser, aus dem Kraftstoff einzusetzen, wobei dieser als elektrische Koaleszer ausgebildete Wasserabscheider auf der Reinseite innerhalb des Ringfilterelements angeordnet ist und zudem zwei zur Filterachse angeordnete Elektroden aufweist, von denen zumindest eine vom Kraftstoff vorzugsweise mechanisch und/oder elektrisch isoliert ist. Im Vergleich zu herkömmlichen Koaleszern mit entsprechenden Koaleszermaterialien unterliegt ein als elektrischer Koaleszer ausgebildeter Wasserabscheider keinem oder einem nur geringen Verschleiß und kann dadurch über die gesamte Lebensdauer der Kraftstofffiltereinrichtung in derselben verbleiben. Hierdurch lässt sich insbesondere der Wartungsaufwand für eine derartige Kraftstofffiltereinrichtung deutlich reduzieren. Zudem weist ein elektrischer Koaleszer eine größere Unempfindlichkeit gegenüber der Zusammensetzung des Kraftstoffs, weiterer Additive und Wasser auf, ohne die Abscheideleistung zu beeinträchtigen. Von besonderem Vorteil ist darüber hinaus, dass ein als elektrischer Koaleszer ausgebildeter Wasserabscheider die Möglichkeit bietet, individuell auf spezielle Parameter des Abscheideprozesses, beispielsweise die Tropfenbewegung oder Tropfenbildung, Einfluss zu nehmen. Von besonderem Vorteil bei der erfindungsgemäßen Anordnung der beiden Elektroden des Wasserabscheiders ist zudem, dass diese an bislang nicht besetzten Stellen angeordnet werden können, wodurch die erfindungsgemäße Kraftstofffiltereinrichtung äußerst kompakt aufgebaut werden kann.

Durch die Dispergierung von Wasser in Kraftstoff wird eine Wasser-Kraftstoff-Emulsion generiert. Dabei handelt es sich um ein binäres System, dessen wesentliches Merkmal die Ausbildung einer Mischungslücke ist, die sich nahezu über den gesamten Konzentrationsbereich erstreckt. Aufgrund der thermodynamischen Instabilität des Systems strebt dieses einen Zustand an, der energetische betrachtet ein Minimum darstellt. Die Trennung der beiden Phasen wird somit beschleunigt, bis schlussendlich völlige Phasenseparation vorliegt. Um den Demulgier-Prozess bei einer Wasser-Kraftstoff-Emulsion zu intensivieren, wird nun die vorteilhafte Wirkung der Anwesenheit eines elektrischen Feldes genutzt. Dabei wird der Vorgang der Tropfenkoaleszenz durch die polarisierende Wirkung des anliegenden elektrischen Feldes forciert. Die auftretenden Kräfte im elektrischen Feld bewirken eine Steigerung der Beweglichkeit der Wassertropfen, dies führt infolgedessen zu einer höheren Kollisionsrate, welche sich wiederum positiv auf die Tropfenkoaleszenz auswirkt. Die Tropfen vereinigen sich somit zu größeren Tropfen und fließen zusammen. Sind die Tropfen entsprechend groß, überwiegt die Schwerkraft und die spezifisch dichtere Wasserphase sinkt ab.

Entsprechend einem Beispiel, das das Verständnis der Erfindung erleichtert, sind die beiden Elektroden rohrförmig ausgebildet und formen einen Ringkanal, der im Einbauzustand oben angeordnete, tangential gerichtete Einströmöffnungen aufweist, die eine schraubenförmige Strömung des Kraftstoffs im Ringkanal erzwingen. Im vorliegenden Fall ist somit der als elektrischer Koaleszer ausgebildete Wasserabscheider auf der Reinseite zwischen dem Ringfilterelement und einem Endabscheider angeordnet, so dass das Ringfilterelement selbst nicht unbedingt eine koaleszierende Wirkung aufweisen muss. Die außenliegende Elektrode des Wasserabscheiders dient dem durch das Ringfilterelement strömenden Kraftstoff als Leitelement und lenkt diesen nach oben zu den Einströmöffnungen um. Dort tritt der Kraftstoff durch die Einströmöffnungen in den durch die beiden Elektroden begrenzten Ringkanal tangential ein, wodurch die helixförmige bzw. schraubenförmige Strömung des Kraftstoffs nach unten im Ringkanal bewirkt wird. Die schraubenförmige Strömung und der damit verbundene Dralleffekt unterstützt die Entwässerung des Kraftstoffs. Die außenliegende Elektrode kann dabei beispielsweise als Masseelektrode dienen, wogegen die innenliegende Elektrode mit Spannung versorgt wird. Alternativ können selbstverständlich auch beide Elektroden mit Spannung versorgt werden. Besonders die erste Variante ermöglicht jedoch einen vergleichsweise kostengünstigen Aufbau.

Zweckmäßig ist am unteren Ende der innenliegenden Elektrode ein Endabscheider vorgesehen, der über ein schallbecherartiges Zwischenstück in die innenliegende Elektrode übergeht. An diesem schallbecherartigen Zwischenstück können zusätzlich noch drallgebende Rippen angeordnet sein, welche eine Bewegung der koaleszierten Wassertropfen radial nach außen unterstützen. Dort treffen die koaleszierten Wassertröpfchen an die Wandung der Kraftstofffiltereinrichtung und fallen an dieser nach unten in einen unterhalb des Endabscheiders angeordneten Wassersammelraum. Der von den Wasseranteilen zumindest weitestgehend befreite Kraftstoff strömt anschließend durch den Endabscheider und einen innerhalb der innenliegenden Elektrode vorgesehenen Reinkanal zur Brennkraftmaschine. Die Emulsionstrennung selbst erfolgt dabei mittels Elektrokoaleszenz im Ringspalt zwischen den beiden Elektroden, wobei eine davon oder beide vorzugsweise mechanisch und/oder elektrisch isoliert ausgeführt sind und diese üblicherweise unterhalb der Isolierschicht glatte Metalloberflächen aufweisen. Durch die tangential gerichteten Einströmöffnungen wird eine schraubenförmige Strömungsbahn im Ringspalt erzwungen, welche die Wasserabscheidung zusätzlich unterstützt.

Bei einem hierzu alternativen Beispiel ist die außenliegende Elektrode rohrförmig mit einem oberen Durchgang ausgebildet, wogegen die innenliegende Elektrode zylinderförmig ausgebildet ist und an ihrer nach außen gerichteten Mantelfläche eine schraubenförmige Nut aufweist. Beide Elektroden liegen dabei aneinander an und begrenzen einen schraubenförmigen Kanal, der über den Durchgang mit der Reinseite fluidübertragend verbunden ist. Der Kanal ist somit auf einer Seite durch die außenliegende Elektrode begrenzt, während er an den drei übrigen Seiten, sofern es sich um einen rechteckförmigen Kanal handelt, von der innenliegenden Elektrode begrenzt ist. Bei dieser Variante sitzt somit der elektrische Koaleszer ebenfalls stromab des Ringfilterelements und somit auf der Reinseite, wobei der Aufbau der Elektroden so gestaltet ist, dass der Strömungsweg verlängert wird, indem die innere Elektrode beispielsweise ein voller oder hohler Zylinderblock ist, bei welchem an der äußeren Mantelfläche die Strömungskanäle eingefräst sind. Durch die Verlängerung des Weges aufgrund des ebenfalls helix- oder schraubengangförmigen Kanals kann ein deutlich längere Kontaktzeit zwischen dem zu reinigenden Kraftstoff und den Elektroden erzielt werden, was ebenfalls einen positiven Einfluss auf die koaleszierende Wirkung des elektrischen Koaleszers hat.

Bei einem weiteren Beispiel begrenzen die außenliegende Elektrode und die innenliegende Elektrode zusammen einen zick-zack-förmigen Ringkanal. Der zick-zack-förmige Ringkanal ist dabei in einem Längsschnitt durch die beiden Elektroden zu sehen, das heißt durch einen Schnitt entlang der Filterachse. Durch die Zick-zack-Form ist es möglich, dass etwaige Wassertropfen an der gegenüberliegenden Seite abprallen und einen Wasserfilm bilden, der dann nach unten in den dort angeordneten Wassersammelraum abfließen kann. Um Spannungsspitzen zu vermeiden, sollten jedoch die Ecken des Kanals abgerundet werden. Durch die zick-zack-förmige Ausführung des Kanals kann wiederum die Kontaktzeit mit den beiden Elektroden verlängert und damit der Wasserabscheidegrad positiv beeinflusst werden.

Erfindungsgemäß ist die außenliegende Elektrode an dem Ringfilterelement angeordnet, wogegen die innenliegende Elektrode zylinderförmig oder rohrförmig ausgebildet ist. Zudem weist die außenliegende Elektrode ein faltensternförmiges Metallgitter auf, welches komplementär zu einem Faltenstern des Ringfilterelements ausgebildet und an einer Innenseite desselben anliegt, wobei alternativ auch denkbar ist, dass die außenliegende Elektrode durch Metallpigmente gebildet wird, die auf einer Innenseite des Faltensterns des Ringfilterelements angeordnet sind. Die außenliegende Elektrode kann somit ein feinmaschiges Gitter sein bzw. durch leitende Partikel auf der Oberfläche des Ringfilterelements gebildet werden, was den großen Vorteil bietet, dass die außenliegende Elektrode turnusmäßig zusammen mit dem Ringfilterelement erneuert wird. Tritt somit beispielsweise ein Schaden an der außenliegenden Elektrode auf, so ist dieser durch einen einfachen Austausch des Ringfilterelements zu beheben.

Bei einem weiteren Beispiel ist die außenliegende Elektrode als fluiddurchlässige Metallzarge ausgebildet, während die innenliegende Elektrode zylinderförmig oder rohrförmig ausgebildet ist. Auch hier ist wiederum ein ringförmiger Kanal zwischen der außenliegenden und der innenliegenden Elektrode gebildet, wobei in diesem Fall die außenliegende Elektrode sogar einen Stützfunktion des Ringfilterelements übernehmen kann, insbesondere sofern sie als dessen Stützzarge ausgebildet ist. Auch hier wäre bei einem Schaden an der außenliegenden Elektrode ein Austausch durch einen einfachen Wechsel des Ringfilterelements einfach zu bewerkstelligen.

Unabhängig von der Kraftstofffiltereinrichtung ist auch denkbar, einen elektrischen Koaleszer im Bereich einer Kraftstoffleitung einzusetzen, wobei die außenliegende Elektrode beispielsweise einen Leitungsmantel bilden kann, während die innenliegende und koaxial zur außenliegenden Elektrode angeordnete Elektrode die spannungsbeaufschlagte Elektrode darstellt. Die außenliegende Elektrode kann dabei beispielsweise die Masseelektrode sein. Ein derartig in eine Kraftstoffleitung integrierter elektrischer Wasserabscheider ermöglicht eine zusätzliche Wasserabscheidung, so dass dies besonders vorteilhaft bereits stromauf der Kraftstofffiltereinrichtung einzusetzen ist.

Alternativ hierzu ist auch denkbar, die beiden Elektroden mittels entsprechendem Wickeln von isolierten Bändern um eine Kraftstoffleitung zu winden und derart auszurichten, dass bei einem Schnitt immer eine Masseelektrode gegenüber einer Hochspannungselektrode liegt. Hierdurch ergibt sich für ein Spannungsfeld eine Wendelstruktur (Helixform) durch die Kraftstoffleitung bzw. den Kanal. Eine derartige Ausgestaltung des elektrischen Koaleszers ermöglicht eine vergleichsweise einfache Herstellung, wie erleichterte Kontaktierung der beiden Elektroden, sowie eine verbesserte Entwässerung durch die Wendelstruktur des Spannungsfeldes.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Schnittdarstellung durch eine nicht erfindungsgemäße Kraftstofffiltereinrichtung gemäß einer ersten Ausführungsform,
- Fig. 2: eine Detaildarstellung aus Fig. 1, jedoch mit anderer innenliegender Elektrode,
- Fig. 3: eine Darstellung wie in Fig. 2, jedoch mit geänderter innenliegender und außenliegender Elektrode,
- Fig. 4: eine Ausführungsform der erfindungsgemäßen Kraftstofffiltereinrichtung mit an dem Ringfilterelement angeordneten äußerer Elektrode,
- Fig. 5: eine Darstellung wie in Fig. 4, jedoch mit als Zarge ausgebildeter äußerer Elektrode,
- Fig. 6: eine alternative Ausführungsform Kraftstofffiltereinrichtung mit als Umlenkeinrichtung ausgebildeter äußerer Elektrode,
- Fig. 7: eine Darstellung wie in Fig. 6, jedoch mit zwischen den beiden Elektroden liegendem Koaleszerkörper,
- Fig. 8: eine Kraftstoffleitung mit innenliegender und außenliegender Elektrode,
- Fig. 9: ebenfalls eine Kraftstoffleitung mit gewundenen Elektroden.

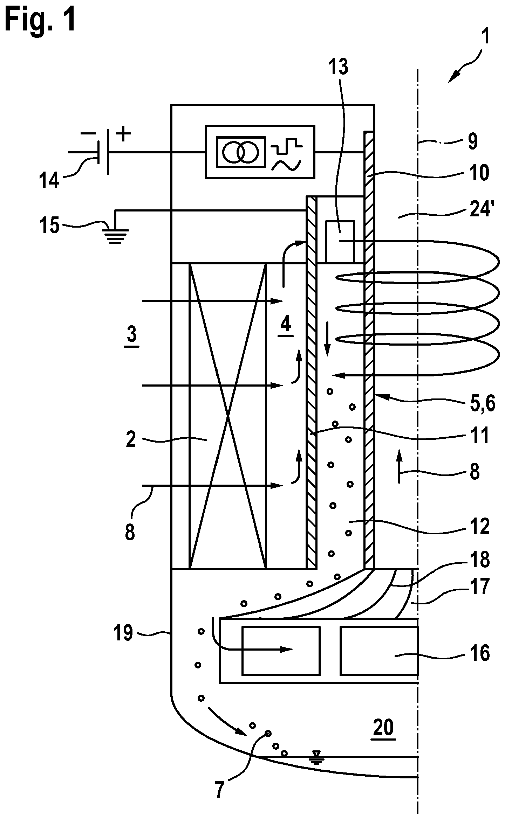

Entsprechend den Fig. 1 bis 7, weist eine Kraftstofffiltereinrichtung 1 für eine im Übrigen nicht gezeigte Brennkraftmaschine, insbesondere in einem Kraftfahrzeug, ein Ringfilterelement 2 auf, das eine Rohseite 3 von einer Reinseite 4 trennt und im vorliegenden Fall somit von außen nach innen durchströmt ist. Darüber hinaus ist ein als elektrischer Koaleszer 5 ausgebildeter Wasserabscheider 6 zum Abscheiden einer polaren Phase, insbesondere zum Abscheiden von Wasser 7, aus dem Kraftstoffstoff 8 vorgesehen. Bei sämtlichen gezeigten Ausführungsformen der Kraftstofffiltereinrichtung 1 ist dabei vorgesehen, dass der als elektrischer Koaleszer 5 ausgebildete Wasserabscheider 6 auf der Reinseite 4 innerhalb des Ringfilterelements 2 angeordnet ist und zwei koaxial zur Filterachse 9 angeordnete Elektroden 10,11 aufweist, von denen zumindest eine vorzugsweise elektrisch und/oder mechanisch vom Kraftstoff 8 isoliert ist.

Betrachtet man die Kraftstofffiltereinrichtung 1 gemäß der Fig. 1, so kann man erkennen, dass die beiden Elektroden 10, 11 rohrförmig ausgebildet sind und einen Ringkanal 12 begrenzen, der im Einbauzustand oben angeordnete, tangential gerichtete Einströmöffnungen 13 aufweist, die eine schraubenförmige Strömung des Kraftstoffs 8 im Ringkanal 12 erzwingen. Im vorliegenden Fall ist dabei die innere Elektrode 10 mit einer Spannungsquelle 14 verbunden, wogegen die äußere Elektrode 11 mit einer Masse 15 verbunden ist und deshalb landläufig auch als Masseelektrode bezeichnet werden kann.

Der durch die Kraftstofffiltereinrichtung 1 und dessen Ringfilterelement 2 von der Rohseite 3 zur Reinseite 4 strömende Kraftstoff 8 wird zunächst entlang der außenliegenden Elektrode 11 nach oben umgelenkt, bis er die Einströmöffnungen 13 erreicht. Da diese in Tangentialrichtung in den Ringkanal 12 münden, wird dem durch die Einströmöffnungen 13 in den Ringkanal 12 einströmenden Kraftstoff 8 eine Drallströmung bzw. eine schraubenförmige Strömung aufgezwungen, was zum Einen zu einem verlängerten Kontakt mit den beiden Elektroden 10, 11 und verbunden damit zu einer verbesserten Wasserabscheidung führt. Die schwereren Wassertröpfchen 7 werden dabei aufgrund der sich einstellenden Fliehkräfte nach außen an die außenliegende Elektrode 11 geschleudert und fließen entlang dieser nach unten ab. Am unteren Ende der innenliegenden Elektrode 10 ist dabei eine Endabscheider 16 vorgesehen, der über ein schallbecherartiges Zwischenstück 17 in die innenliegende Elektrode 10 übergeht. Auf dem Zwischenstück 17 sind wiederum Strömungsleitelemente 18, beispielsweise Rippen, angeordnet, welche einerseits die Koaleszenz weiter erhöhen und andererseits die bereits koaleszierten Wassertröpfchen 7 radial nach außen in Richtung einer Gehäusewandung 19 schleudern sollen. Von dort können sie dann nach unten in einen unterhalb des Endabscheiders 16 gelegenen Wassersammelraum 20 absinken. Der Kraftstoff 8 hingegen tritt durch den Endabscheider 16 hindurch und strömt durch einen durch die hohle innenliegende Elektrode 10 gebildeten Reinkanal 24' nach oben aus der Kraftstofffiltereinrichtung 1 aus.

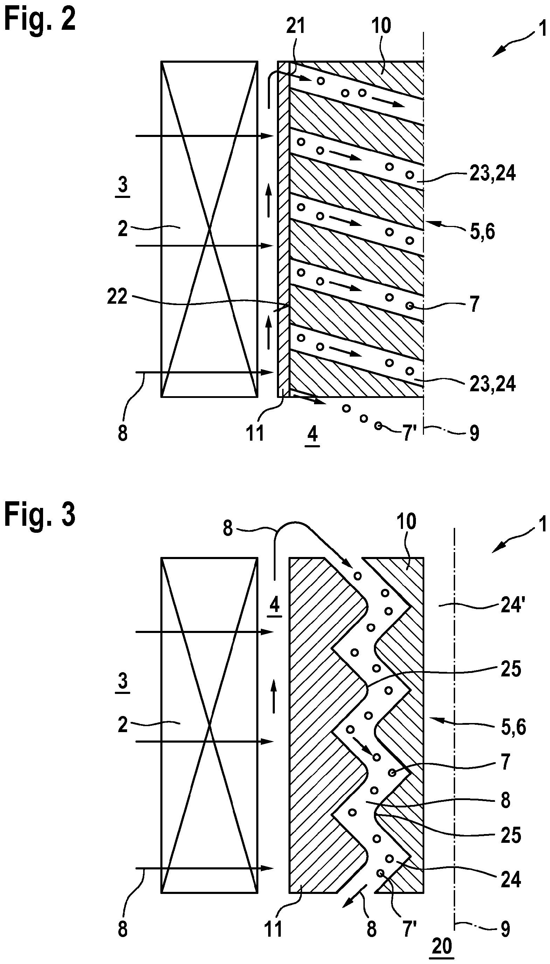

Bezüglich der Kraftstoffeinrichtungen 1 gemäß den Fig. 2 bis 7 gilt im Großen und Ganzen dasselbe, wobei sich jedoch die einzelnen Elektroden 10, 11 unterscheiden. Betrachtet man beispielsweise die Kraftstofffiltereinrichtung 1 gemäß der Fig. 2, so kann man anhand dieser erkennen, dass die außenliegende Elektrode 11 rohrförmig mit einem oberen Durchgang 21 ausgebildet ist. Die innenliegende Elektrode 10 hingegen ist zylinderförmig ausgebildet und weist an ihrer nach außen gerichteten Mantelfläche 22 eine schraubenförmige Nut 23 auf. Die außenliegende und die innenliegende Elektrode 11, 10 liegen dabei aneinander an und begrenzen einen schraubenförmigen Kanal 24, der über den Durchgang 21 mit der Reinseite 4 fluidübertragend verbunden ist. Durch den schraubenförmigen Kanal 24 kann ebenfalls wiederum eine Kontaktzeit zwischen dem zu reinigenden Kraftstoff 8 und den beiden Elektroden 10, 11 verlängert und damit die wasserabscheidende Wirkung erhöht werden. Weist die Nut 23 und damit auch der Kanal 24 einen rechteckförmigen Kanalquerschnitt auf, so werden drei Kanalwände des Kanals 24 von der innenliegende Elektrode 10 und eine außenliegende Wand von der außenliegenden Elektrode 11 gebildet.

Die Nut 23 und damit auch der Kanal 24 können dabei in die Mantelfläche 22 der innenliegende Elektrode 10 eingefräst werden, wogegen selbstverständlich auch denkbar ist, dass die innenliegende Elektrode 10 nicht wie dargestellt einen massiven Querschnitt aufweist, sondern ebenfalls einen rohrförmigen und damit einen innenliegenden Reinkanal 24' (vgl. auch die Fig. 1, 3 bis 7), durch welchen der von Wasseranteilen gereinigte Kraftstoff 8 aus der Kraftstofffiltereinrichtung 1 ausgetragen werden kann.

Betrachtet man die Kraftstofffiltereinrichtung 1 gemäß der Fig. 3, so kann man erkennen, dass der Kanal 24, welcher durch die beiden Elektroden 10, 11 gebildet wird, mit einem Schnitt durch die Längsachse einen zick-zack-förmigen Verlauf hat und dadurch wiederum die Verweildauer des von Wasseranteilen zu reinigenden Kraftstoffs 8 zwischen den beiden Elektroden 10, 11 verlängert. Um Spannungsspitzen zu vermeiden, sollten zusätzlich die Ecken 25 abgerundet sein. Neben der erhöhten Verweildauer des zu reinigenden Kraftstoff zwischen den beiden Elektroden 10, 11 kann die zick-zack-förmige Gestaltung des Kanals 24 auch Prallflächen zur Verfügung stellen, welche die Wasserabscheidung begünstigen.

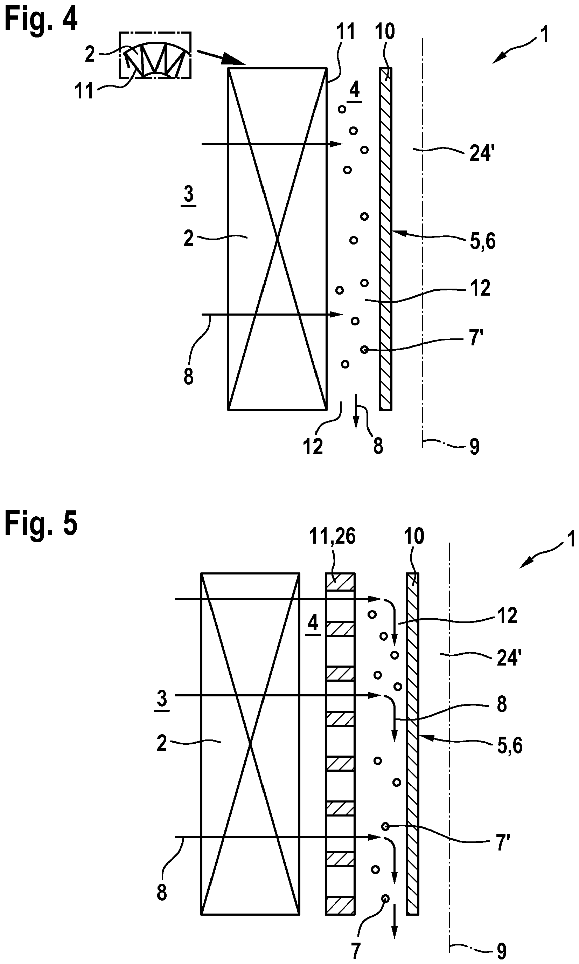

Betrachtet man die erfindungsgemäße Kraftstofffiltereinrichtung 1 gemäß der Fig. 4, so kann man an dieser erkennen, dass die außenliegende Elektrode 11 am Ringfilterelement 2 angeordnet ist, wobei dieses Ringfilterelement 2 in der Art eines Faltensterns ausgebildet ist. Die innenliegende Elektrode 10 wiederum ist zylinderförmig bzw. im vorliegenden Fall rohrförmig ausgebildet. In diesem Fall ist somit die außenliegende Elektrode 11 ein Bestandteil des Ringfilterelements 2 und kann beispielsweise turnusmäßig mit diesem ausgetauscht werden. Die außenliegende Elektrode 11 kann dabei als faltensternförmiges Metallgitter ausgebildet sein, welches komplementär zum Faltenstern des Ringfilterelements 2 ausgebildet ist und an der Innenseite des Ringfilterelements 2 anliegt. Alternativ kann auch vorgesehen sein, dass die außenliegende Elektrode 11 durch Metallpigmente gebildet ist, die auf einer Innenseite des Faltensterns des Ringfilterelements 2 angeordnet sind.

Bei der Kraftstofffiltereinrichtung 1 gemäß der Fig. 5 ist die außenliegende Elektrode 11 als fluiddurchlässige Metallzarge 26 ausgebildet, während die innenliegende Elektrode 10 zylinderförmig oder rohrförmig ausgebildet ist. Die außenliegende Elektrode 11 kann dabei beabstandet zum Ringfilterelement 2 angeordnet sein, wie dies gemäß der Fig. 5 dargestellt ist, oder aber auch eine Stützzarge des Ringfilterelements 2 bilden und damit in direktem Kontakt zu diesem stehen. Die innenliegende Elektrode 10 wiederum bildet eine Prallwand sowie eine Umlenkung, auf welcher die aufprallenden Wassertröpfchen 7' koalesziert und nach unten in den Wassersammelraum 20 abgeleitet werden. Auch hier ist ein Austausch der außenliegenden Elektrode 11 durch einen einfachen Austausch des Ringfilterelements 2 vergleichsweise einfach möglich.

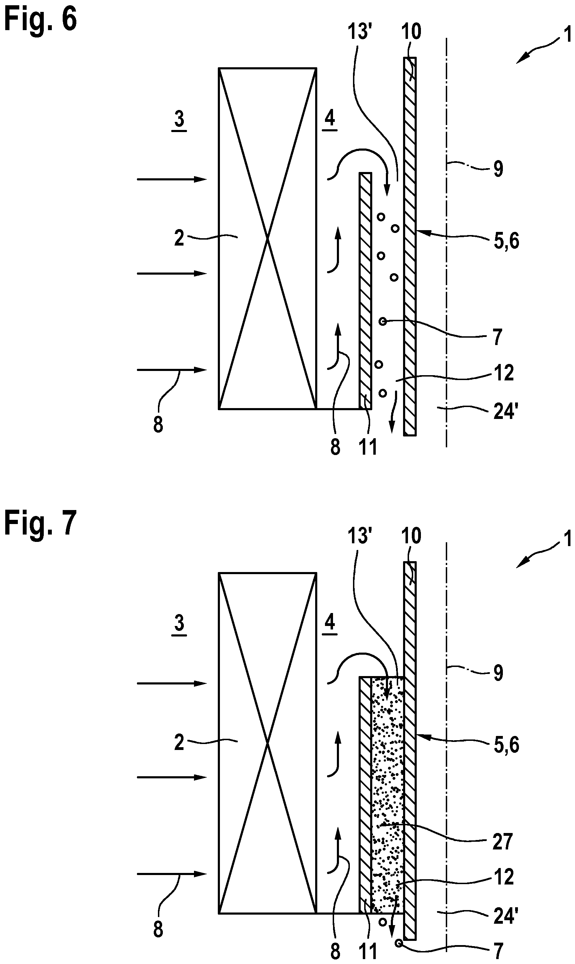

Betrachtet man die gemäß den Fig. 6 und 7 dargestellten Kraftstofffiltereinrichtungen 1, so fungiert die außenliegende Elektrode 11 als Umlenkung, um den von Wasseranteilen zu reinigenden Kraftstoff 8 nach oben umzulenken und über eine Einströmöffnung 13' in den zwischen den beiden Elektroden 10, 11 liegenden Ringkanal 12 zu zwingen. Um die koaleszierende Wirkung im Ringkanal 12 zusätzlich steigern zu können, kann in dem Ringspalt bzw. in dem Ringkanal 12 poröser Koaleszerkörper 27 angeordnet sein, wie dies gemäß der Fig. 7 dargestellt ist. Ein Abfluss des von Wasseranteilen gereinigten Kraftstoffs 8 kann wiederum durch den innerhalb der innenliegenden Elektrode 10 liegenden Reinkanal 24' erfolgen.

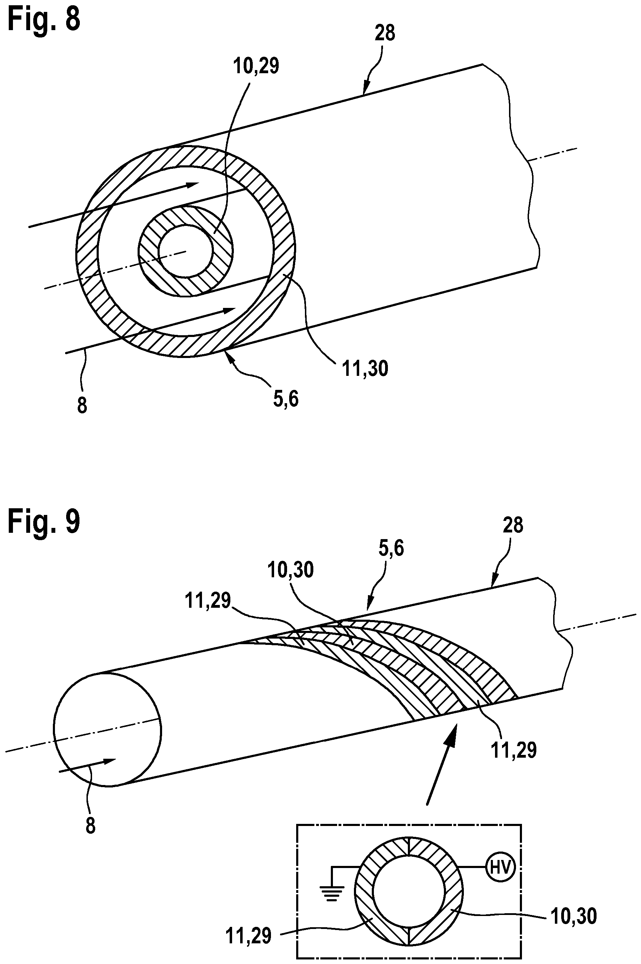

Betrachtet man noch die Fig. 8 und 9, so kann man in diesen eine Kraftstoffleitung 28 mit ebenfalls zwei Elektroden 10, 11 erkennen. Gemäß der Fig. 8 ist dabei die außenliegende Elektrode 11 koaxial zur innenliegenden Elektrode 10 angeordnet, wogegen bei der gemäß der Fig. 9 gezeigten Kraftstoffleitung 28 die beiden vorzugsweise mechanisch und/oder elektrisch isolierten Elektroden 10, 11 um die Kraftstoffleitung 28 derart gewickelt sind, dass eine komplementär zur außenliegenden Elektrode 11 ausgebildete Masseelektrode 29 und eine komplementär zur innenliegenden Elektrode 10 ausgebildete Hochspannungselektrode 30 im Querschnitt jeweils die Hälfte des Umfangs der Kraftstoffleitung 28 abdeckt (vgl. den Querschnitt aus Fig. 9). Eine derartige Kraftstoffleitung 28 mit den zugehörigen Elektroden 10, 11, 29, 30 kann selbstverständlich auch im Bereich der in den Fig. 1 bis 7 beschriebenen Kraftstofffiltereinrichtung 1 oder stromauf bzw. stromab derselben an einem beliebigen Ort angeordnet werden und der zusätzlichen bzw. vorbereiteten Wasserabscheidung dienen.

## Patentansprüche

1. Kraftstofffiltereinrichtung (1) für eine Brennkraftmaschine,
- mit einem Ringfilterelement (2), das eine Rohseite (3) von einer Reinseite (4) trennt,
- mit einem als elektrischem Koaleszer (5) ausgebildeten Wasserabscheider (6) zum Abscheiden von Wasser (7) aus dem Kraftstoff (8),
- wobei der als elektrischer Koaleszer (5) ausgebildete Wasserabscheider (6) auf der Reinseite (4) innerhalb des Ringfilterelements (2) angeordnet ist und zwei koaxial zur Filterachse (9) angeordnete Elektroden (10,11) aufweist, von denen zumindest eine vom Kraftstoff (8) isoliert ist,
**dadurch gekennzeichnet,**
- **dass** die außenliegende Elektrode (11) an dem Ringfilterelement (2) angeordnet ist,
- **dass** die innenliegende Elektrode (10) zylinderförmig oder rohrförmig ausgebildet ist.

2. Kraftstofffiltereinrichtung nach Anspruch 1,
**dadurch gekennzeichnet,**
- **dass** die außenliegende Elektrode (11) ein faltensternförmiges Metallgitter aufweist, welches komplementär zu einem Faltenstern des Ringfilterelements (2) ausgebildet ist und an einer Innenseite des Ringfilterelements (2) anliegt, oder
- **dass** die außenliegende Elektrode (11) durch Metallpigmente gebildet ist, die auf einer Innenseite des Faltensterns des Ringfilterelements (2) angeordnet sind.

3. Kraftstofffiltereinrichtung nach einem der vorherigen Ansprüche,
**dadurch gekennzeichnet,**
**dass** die innenliegende Elektrode (10) einen innenliegenden Reinkanal (24') begrenzt.

## Claims

1. Fuel filter device (1) for an internal combustion engine,
- with a ring filter element (2) separating a dirty side (3) from a clean side (4),
- with a water separator (6) configured as electric coalescer (5) for separating water (7) from the fuel (8),
- wherein the water separator (6) configured as electric coalescer (5) is arranged on the clean side (4) within the ring filter element (2) and has two electrodes (10, 11) arranged coaxially with respect to the filter axis (9), of which at least one is insulated from the fuel (8),
**characterised in that**
- the outer electrode (11) is arranged on the ring filter element (2),
- the inner electrode (10) is cylindrical or tubular in shape.

2. Fuel filter device according to claim 1,
**characterised in that**
- the outer electrode (11) has a pleated star-shaped metal grid configured complementarily to a pleated star of the ring filter element (2) and engages against an inside of the ring filter element (2) or
- that the outer electrode (11) is formed by metal pigments arranged on an inside of the pleated star of the ring filter element (2).

3. Fuel filter device according to any one of the preceding claims,
**characterised in that**
the inner electrode (10) delimits an inner clean channel (24').

## Revendications

1. Dispositif de filtre à carburant (1) pour un moteur à combustion interne,
- avec un élément de filtre annulaire (2) qui sépare un côté produit brut (3) d'un côté produit pur (4),
- avec un séparateur d'eau (6) conçu comme un coalesceur électrique (5) pour séparer l'eau (7) du carburant (8),
- dans lequel le séparateur d'eau (6) conçu comme un coalesceur électrique (5) est agencé sur le côté produit pur (4) à l'intérieur de l'élément de filtre annulaire (2), et présente deux électrodes (10, 11) agencées coaxiales à l'axe de filtre (9), dont au moins une est isolée du carburant (8),
**caractérisé en ce**
- **que** l'électrode extérieure (11) est agencée sur l'élément de filtre annulaire (2),
- **que** l'électrode intérieure (10) est conçue de forme cylindrique ou tubulaire.

2. Dispositif de filtre à carburant selon la revendication 1,
**caractérisé en ce**
- **que** l'électrode extérieure (11) présente une grille métallique en forme d'étoile plissée, qui est conçue pour être complémentaire à une étoile plissée de l'élément de filtre annulaire (2) et reposant contre un côté intérieur de l'élément de filtre annulaire (2), ou
en ce que l'électrode extérieure (11) est formée de pigments métalliques, qui sont agencés sur un côté intérieur de l'étoile plissée de l'élément de filtre annulaire (2).

3. Dispositif de filtre à carburant selon l'une des revendications précédentes,
**caractérisé en ce**
**que** l'électrode intérieure (10) délimite un canal interne de produit pur (24').
